# EUROPEAN PATENT APPLICATION

(11) **EP 4 723 264 A1**
(43) Date of publication of application: **08.04.2026**
(21) Application number: 24815551.7
(22) Date of filing: 30.05.2024
(51) Int. Cl.: H01M 10/04, H01M 4/38, H01M 4/48, H01M 10/0587, H01M 50/15, H01M 50/103, H01M 50/342, H01M 50/463, H01M 50/474, H01M 50/477

(54) **POWER STORAGE DEVICE**

(30) Priority: 31.05.2023 JP 2023090438
(71) Applicant: Panasonic Intellectual Property Management Co., Ltd., Kadoma-shi, Osaka 571-0057 (JP)
(72) Inventor: GESHI, Shinya, Kadoma-shi, Osaka 571-0057 (JP); NISHINO, Hajime, Kadoma-shi, Osaka 571-0057 (JP); YOSHIZAWA, Hiroshi, Kadoma-shi, Osaka 571-0057 (JP); KOZUKI, Kiyomi, Kadoma-shi, Osaka 571-0057 (JP)
(74) Representative: Eisenführ Speiser
(86) International application number: PCT/JP2024/019813
(87) International publication number: WO 2024/248070

(57) **Abstract**

This power storage device comprises: an electrode body (14) in which a positive electrode (11), a negative electrode (12), and a separator (13) are wound; a polygonal cylindrical case (20) that has a polygonal cylindrical part and an opening at one end of the cylindrical part, and in which the electrode body (14) and an electrolytic solution are accommodated; and a rectangular sealing body (30) that closes the opening of the case (20). A first holding member (41) is interposed between the case (20) and the upper end portion in the axial direction of the electrode body (14). The first holding member (41) has a wall part (41B) positioned in a corner space between the electrode body (14) and a corner portion of the cylindrical part.

## Description

### TECHNICAL FIELD

The present disclosure relates to a power storage device.

### BACKGROUND ART

A rectangular battery has been known as a form of a power storage device. The rectangular battery has a rectangular prism-shaped case (e.g., PATENT LITERATURE 1). The rectangular battery is space-efficient, and allows storage in a stable state within a storage space. Accordingly, the rectangular battery is suitable for reducing the size and thickness of an electric device.

### CITATION LIST

### PATENT LITERATURE

PATENT LITERATURE 1: Japanese Patent Publication No. 3709134

### SUMMARY

Use of the rectangular battery described above certainly improves the space efficiency. However, the rectangular battery is required to further improve the reliability in order to achieve high capacity and high output.

Accordingly, it is an advantage of the present disclosure to provide a power storage device that can improve the reliability.

A power storage device according to the present disclosure comprises: an electrode assembly in which a positive electrode, a negative electrode, and a separator that are wound; a polygonal prism-shaped case that includes a prism portion having a polygonal shape, and an opening portion at one end of the prism portion, and stores the electrode assembly and an electrolytic solution; and a sealing assembly that has a polygonal shape and blocks the opening portion of the case, wherein a holding member that intervenes between the case and one end portion of the electrode assembly in an axial direction is provided, and the holding member includes a wall portion positioned in a corner portion space between the electrode assembly and a corner portion of the prism portion.

According to the power storage device in the present disclosure, the reliability can be improved.

### BRIEF DESCRIPTION OF DRAWINGS

FIG. 1 is a schematic sectional view showing a power storage device that is an example of an embodiment.
FIG. 2 is a partially see-through perspective view showing the power storage device that is the example of the embodiment.
FIG. 3 is a perspective view showing a first holding member that is an example of the embodiment.
FIG. 4 is a perspective view showing a second holding member that is an example of the embodiment.
FIG. 5 is another perspective view showing the second holding member that is the example of the embodiment.
FIG. 6 is a perspective view showing a second holding member that is another example of the embodiment.
FIG. 7 is a schematic sectional view showing a power storage device that is another example of the embodiment.
FIG. 8 is a schematic sectional view showing a power storage device that is another example of the embodiment.
FIG. 9 is a schematic sectional view showing a power storage device that is another example of the embodiment.

### DESCRIPTION OF EMBODIMENTS

An example of an embodiment of the present disclosure is described in detail below. In the following description, specific shapes, materials, directions, numerical values and the like are examples to facilitate understanding of the present disclosure, and can be changed as appropriate depending on the application, purpose, specifications and the like.

### [Power Storage Device (End Surface Current Collection Structure)]

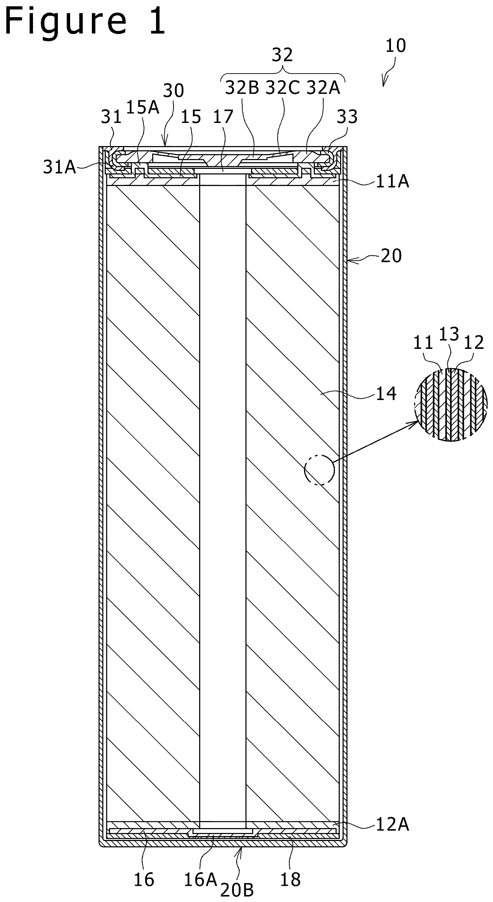

Referring to FIGS. 1 to 5, a power storage device 10 that is an example of an embodiment is described.

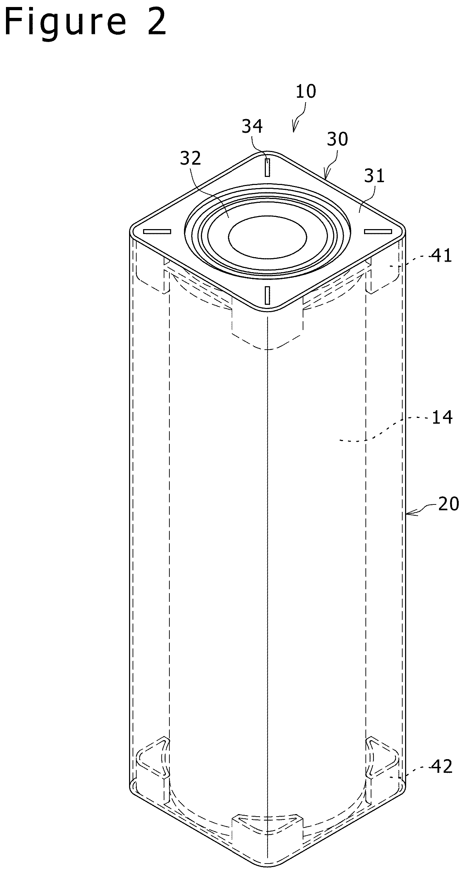

As shown in FIGS. 1 and 2, the power storage device 10 comprises: a cylindrical-shaped electrode assembly 14 in which a strip-shaped positive electrode 11 and a strip-shaped negative electrode 12 are wound with a strip-shaped separator 13 interposed; electrolyte (not shown); a case 20 that has a polygonal prism shape and stores the electrode assembly 14 and the electrolyte; a sealing assembly 30 that has a polygonal shape and blocks an opening portion of the case 20; and holding members (a first holding member 41 and a second holding member 42) that hold opposite ends of the electrode assembly 14 in an axial direction. Although the details are described later, the power storage device 10 can improve the reliability. Note that in FIG. 1, the first holding member 41 and the second holding member 42 are omitted.

The present embodiment is the combination of the case 20 having a quadrangular prism shape as a polygonal prism shape, and the sealing assembly 30 having a quadrangular prism shape as a polygonal shape. However, the present disclosure is not limited to this. For example, a combination of a triangular prism case and a triangular sealing assembly, a combination of a pentagonal prism case and a pentagonal sealing assembly, a combination of a hexagonal prism case and a hexagonal sealing assembly, or a combination of a parallelogram prism case and a parallelogram sealing assembly may be adopted. Note that this similarly applies to a case of representing a polygonal shape in the following description.

Note that the description is sometimes made below along the axial direction of the power storage device 10. The description is sometimes made in accordance with the upper side or the lower side in the axial direction.

The positive electrode 11 includes a strip-shaped positive electrode core material, and a positive electrode mixture layer formed on at least one surface of the positive electrode core material. On the upper end side of the positive electrode 11 (on the one end side of the positive electrode 11 in the width direction), a positive electrode core exposed portion 11A where no positive electrode mixture layer is provided in the positive electrode core material protrudes. The positive electrode core material may be made of metal foil that is stable in the potential range of the positive electrode 11, such as of aluminum or an aluminum alloy, a film on which the metal is disposed as the surface layer, or the like.

The positive electrode mixture layer includes a positive-electrode active material, a conductive agent such as acetylene black, and a binding agent such as polyvinylidene fluoride, and is formed on each of the opposite surfaces, for example. For example, a lithium transition metal composite oxide is used as the positive-electrode active material.

The negative electrode 12 may include, for example, a negative electrode core, and a negative electrode mixture layer formed on the surface of negative electrode core. Instead of the negative electrode composite layer of the negative electrode 12, metal lithium foil may be adopted. The negative electrode 12 may include a negative electrode core, and lithium metal may deposit on the surface of the negative electrode core by charging. The negative electrode 12 includes a negative electrode core exposed portion 12A where no negative electrode composite layer (or metal lithium foil) is formed is formed on one end of the negative electrode core in the width direction.

Preferably, in a case where the negative electrode 12 includes a negative electrode mixture layer (or metal lithium foil), the negative electrode mixture layer (or metal lithium foil) is formed on each of the opposite surfaces of the negative electrode core. The negative electrode core may be made of metal foil that is stable in the potential range of the negative electrode 12, such as of copper or a copper alloy, a film on which the metal is disposed as the surface layer, or the like. The negative electrode mixture layer includes a negative-electrode active material, and a binding agent such as styrene-butadiene rubber (SBR). For example, graphite, a silicon- based material or the like are used as the negative-electrode active material.

In a case where the negative-electrode active material includes a silicon-based material, the power storage device 10 can have a higher capacity because the silicon-based material can absorb more lithium ions than graphite can. Examples of the silicon-based material may include Si and an alloy including Si, an Si oxide represented by SiOₓ (0.5 ≤ x ≤ 1.6), an Si-containing material where Si fine particles are dispersed in a lithium silicate phase represented by Li_{2y}SiO_{(2+y)} (0 < y <2), and an Si-containing material where Si fine particles are dispersed in a carbon phase. Preferably, the Si-based material contains SiOₓ (0.5 ≤ x ≤ 1.6). Preferably, in the negative electrode mixture layer, the ratio of the Si-based material to the total mass of the negative-electrode active material is greater than or equal to 10% by weight in view of improving the battery capacity and preventing the charging and discharging cycle characteristics from being degraded.

In the case where the silicon-based material is adopted as the negative-electrode active material of the negative electrode 12 as described above, the volume expansion and contraction of the electrode assembly 14 due to charging and discharging of the power storage device 10 increase. Preferably, irregularities are formed on the surface of the separator 13. The example where irregularities are formed on the surface may be a case where protruding projections are formed in an aligned manner, or a case where a plurality of grooves are formed along the axial direction. Thus, the volume expansion and contraction of the electrode assembly 14 due to charging and discharging of the power storage device 10 can be accommodated.

The electrode assembly 14 is formed to have a cylindrical shape with a wound core (not shown) where the positive electrode 11 and the negative electrode 12 are wound with the separator 13 interposed therebetween in a state where the positive electrode core exposed portion 11A and the negative electrode core exposed portion 12A deviate from each other to protrude on the opposite sides in the axial direction. The wound core in the present embodiment has the cylindrical shape, and is formed to have a circular shape viewed from the axial direction. However, the present disclosure is not limited to this. Similar to the case 20 and the sealing assembly 30, the wound core may be formed to have a polygonal shape viewed from the axial direction. For example, the wound core may have a quadrangular prism shape viewed from the axial direction.

The electrolyte is a non-aqueous electrolyte, and includes a non-aqueous solvent, and electrolyte salt dissolved in the non-aqueous solvent. The non-aqueous solvent may be, for example, any of esters, ethers, nitriles, and amides, and a composite solvent of two or more of them, etc. The non-aqueous solvent may contain a halogen-substituted product made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF₆.

On the upper side of the electrode assembly 14 there are provided a positive electrode current collector plate 15 to which the positive electrode core exposed portion 11A is joined, and an upper insulating plate 17 and the first holding member 41 that are disposed on the upper side of the positive electrode current collector plate 15. Projections 15A that protrude upward, penetrate through through-holes of the upper insulating plate 17 and the first holding member 41, and are joined to an after-mentioned sealing plate 32 are formed on the positive electrode current collector plate 15. Accordingly, the positive electrode 11 and the sealing plate 32 are electrically connected to each other, and the sealing plate 32 functions as a positive electrode external terminal. Note that the power storage device in the present disclosure does not necessarily require the upper insulating plate 17.

A negative electrode current collector plate 16 to which the negative electrode core exposed portion 12A is joined, and a lower insulating plate 18 and the second holding member 42 that are disposed under the negative electrode current collector plate 16, are provided on the lower side of the electrode assembly 14. Projections 16A that protrude downward, penetrate through the through-holes of the lower insulating plate 18 and the second holding member 42, and are joined to the inner surface of an after-mentioned bottom surface portion 20B of the case 20 are formed on the negative electrode current collector plate 16. Accordingly, the negative electrode 12 and the case 20 are electrically connected to each other, and the case 20 functions as a negative electrode external terminal. Note that the power storage device in the present disclosure does not necessarily require the lower insulating plate 18.

### [Case]

The case 20 is a metal container that includes a prism portion having a polygonal prism shape, and an opening portion on the upper end side of the prism portion (a quadrangular prism shape in the present embodiment). According to such a configuration, when an abnormality occurs in the power storage device 10 and the internal pressure increases, corner portion spaces of the case 20 that are gaps between the electrode assembly 14 and the prism portion of the case 20 can be used as gas exhaust paths. Accordingly, a greater number of gas exhaust paths in case of an abnormality in the power storage device 10 can be formed, and the reliability of the power storage device 10 can be improved.

The opening portion of the case 20 is blocked by the sealing assembly 30 described later. The power storage device 10 is sealed by laser-welding the opening portion of the case 20 and the outer periphery of the sealing assembly 30. The case 20 includes the bottom surface portion 20B having a polygonal shape (a quadrangular shape in the present embodiment) viewed from the axial direction.

### [Sealing Assembly]

The sealing assembly 30 is formed to have a polygonal shape (a quadrangular shape in the present embodiment) viewed from the axial direction. The sealing assembly 30 includes: a lid plate 31 provided with first explosion-proof mechanisms at the corner portions; the sealing plate 32 that is provided at the center of the lid plate 31 and is provided with a second explosion-proof mechanism; and a gasket 33 provided at the outer periphery of the sealing plate 32. Note that in the case where the first explosion-proof mechanisms are provided, the second explosion-proof mechanism is not necessarily provided. In the following description, simple representation as the explosion-proof mechanism includes both the first explosion-proof mechanisms and the second explosion-proof mechanism. Note that the configuration where the first explosion-proof mechanisms are provided at the corner portions of the sealing assembly 30 (or the case 20) means that with respect to lines drawn from the center of the sealing assembly 30 (or the case 20) to the corners, the first explosion-proof mechanisms deviate to the respective corners away from the center. By providing the first explosion-proof mechanisms at the corner portions, gas can be easily released through the gaps between the corner portions of the case 20 (prism portion) and the electrode assembly 14. Preferably, they overlap the gap between the electrode assembly 14 and the prism portion of the case 20 in the axial direction.

The lid plate 31 is formed to have a polygonal shape (a quadrangular shape in the present embodiment) viewed from the axial direction. The periphery of the lid plate 31 is fixed by laser welding to the opening portion of the case 20.

As shown in FIG. 2, at the corner portions of the lid plate 31, groove-shaped thin-wall portions 34 that fracture and form exhaust ports in case of an abnormality of the power storage device 10 are formed as the first explosion-proof mechanisms. The thin-wall portions 34 in the present embodiment are formed along the diagonal lines of the quadrangular-shaped sealing assembly 30. Accordingly, when an abnormality occurs in the power storage device 10, the internal pressure increases, and the sealing assembly 30 is pressed outward from the case 20, the thin-wall portions 34 preferentially fracture, and exhaust ports are formed in the sealing assembly 30.

By forming the first explosion-proof mechanisms (thin-wall portions 34) at the respective corner portions of the sealing assembly 30, the corner portion spaces of the case 20 can be used as the exhaust paths, and exhaust can be achieved through the first explosion-proof mechanisms above the corner portion spaces. Accordingly, a greater number of exhaust paths in case of an abnormality in the power storage device 10 can be formed, and the reliability of the power storage device 10 can be improved.

Referring again to FIG. 1, an annular portion 31A formed to cylindrically extend to the inside of the case 20 is formed on the lower surface of the lid plate 31. The sealing plate 32 is disposed on the inner peripheral side of the annular portion 31A via the annular gasket 33, and presses the gasket 33 by a crimping process of bending the distal end portion of the annular portion 31A inward, thus attaching the sealing plate 32 to the lid plate 31.

The sealing plate 32 is formed to have a circular shape viewed from the axial direction. The sealing plate 32 includes: an outer peripheral portion 32A crimped and fixed to the annular portion 31A of the lid plate 31; a center portion 32B formed at the inside of the outer peripheral portion 32A; and a thin-wall portion 32C that intervenes between the outer peripheral portion 32A and the center portion 32D, and serves as the second explosion-proof mechanism. The thickness of the thin-wall portion 32C is less than the thicknesses of the outer peripheral portion 32A and the center portion 32B. Accordingly, when an abnormality occurs in the power storage device 10, the internal pressure increases, and the sealing assembly 30 is pressed outward from the case 20, the thin-wall portion 32C preferentially fractures in the sealing plate 32, and an exhaust port is formed in the sealing plate 32.

### [Holding Members]

The holding members are provided at the opposite end sides of the inside of the case 20, and hold the opposite end portions of the electrode assembly 14 in the axial direction. The holding members include the first holding member 41 and the second holding member 42. The first holding member 41 is provided on the upper end side where the explosion-proof mechanisms described above are provided. The second holding member 42 is provided on the lower end side where the explosion-proof mechanisms are not provided. The present embodiment has the configuration provided with the first holding member 41 and the second holding member 42. However, the present disclosure is not limited to this. Only the first holding member 41 may be provided. Only the second holding member 42 may be provided.

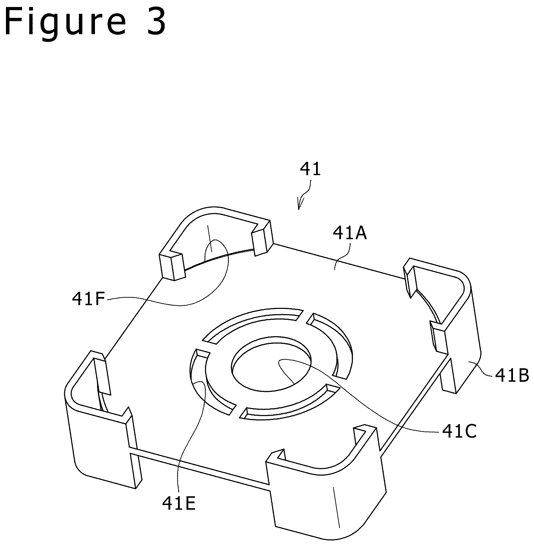

As shown in FIG. 3, the first holding member 41 is provided at the upper end side of the inside of the case 20, and holds the upper end portion of the electrode assembly 14 in the axial direction. Preferably, the first holding member 41 is formed of non-conductive resin, such as a ceramic. The first holding member 41 includes: a plate-shaped pedestal plate portion 41A that faces the upper end surface of the electrode assembly 14; and wall portions 41B that cause the upper end side in the axial direction and the corner portion spaces of the prism portion of the case 20 to communicate with each other. The corner portion spaces of the case 20 are gaps between the electrode assembly 14 and the case 20. At the center portion of the pedestal plate portion 41A, an opening portion 41C for allowing an electrolytic solution to be injected therethrough is formed. The pedestal plate portion 41A may be provided with through-holes 41E through which the projections 15A of the positive electrode current collector plate 15 are inserted.

Preferably, the wall portions 41B are provided for all the corner portion spaces of the prism portion of the case 20. Since the case 20 in the present embodiment has a quadrangular shape, the four corner portion spaces are provided. Preferably, the wall portions 41B provided for the respective corner portion spaces are formed. The wall portions 41B may have prism shapes where through-holes 41F extending in the axial direction are respectively formed. Among peripheral surfaces of the wall portions 41B, surfaces that face the electrode assembly 14 have curved surfaces along the shape of the outer-peripheral surface of the electrode assembly 14, and surfaces that face the prism portion of the case 20 have planar surfaces along the surfaces of the prism portion.

The wall portions 41B protrude downward (toward the electrode assembly) from the lower surface (the surface on the reverse side of surface facing the electrode assembly 14) of the pedestal plate portion 41A, and upward from the upper surface (the surface on the reverse side of surface facing the electrode assembly 14 in the axial direction) of the pedestal plate portion 41A. The portions of the wall portions 41B that protrude upward facilitate formation of the gap above the pedestal plate portion 41A in the case 20. The gaps facilitate movement of gas. Holes or cutouts may be formed in the outer-peripheral surfaces (in particular, surfaces toward the center of the pedestal plate portion 41A) of the upward protruding portions of the wall portions 41B. This facilitates gas flow into the gap above the pedestal plate portion 41A through the through-holes of the wall portions 41B.

According to the first holding member 41, the displacement of the electrode assembly 14 in the case 20 can be prevented, and in the case where an abnormality occurs in the power storage device 10, the internal pressure increases, and the corner portion spaces of the case 20 that are the gaps between the electrode assembly 14 and the prism portion of the case 20 are used as the exhaust paths, gas can be actively guided to the upper end portion of the inside of the case 20 provided with the explosion-proof mechanisms through the through-holes of the wall portions 41B. Accordingly, the reliability of the power storage device 10 can be improved.

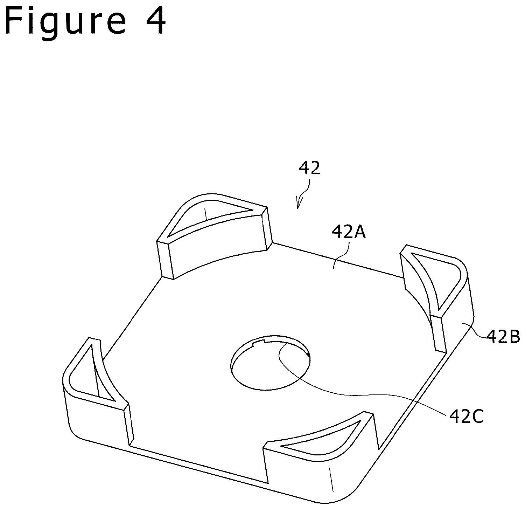

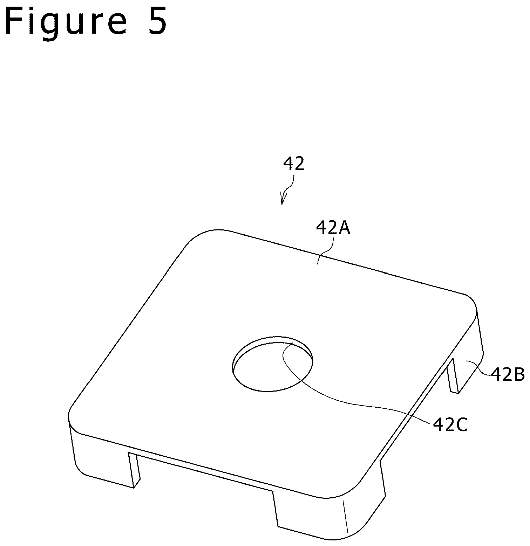

As shown in FIGS. 4 and 5, the second holding member 42 is provided at the lower end side of the inside of the case 20, and holds the lower end portion of the electrode assembly 14 in the axial direction. Preferably, the second holding member 42 is formed of non-conductive resin, such as a ceramic. The second holding member 42 includes a plate-shaped pedestal plate portion 42A that faces the lower end surface of the electrode assembly 14; and wall portions 42B provided at corner portions of the pedestal plate portion 42A. Similar to the wall portions 42B, the wall portions 42B (the wall portions of the holding member farther from the explosion-proof mechanisms between the two holding members) have prism-shaped portions. The lower end surfaces of these prism-shaped portions are blocked by the pedestal plate portion 42A. Similar to the wall portions 42B, surfaces that face the electrode assembly 14 among peripheral surfaces of the wall portions 42B have curved surfaces along the shape of the outer-peripheral surface of the electrode assembly 14, and surfaces that face the prism portion of the case 20 have planar surfaces along the surfaces of the prism portion.

Preferably, the wall portions 42B are provided for all the corner portion spaces of the case 20. Since the case 20 in the present embodiment has a quadrangular shape, the four corner portion spaces are provided. Preferably, the wall portions 42B provided for the respective corner portion spaces are formed.

According to the second holding member 42, the displacement of the electrode assembly 14 in the case 20 can be prevented, and in the case where an abnormality occurs in the power storage device 10, the internal pressure increases, and the corner portion spaces of the case 20 that are the gaps between the electrode assembly 14 and the case 20 are used as the exhaust paths, the lower end portion of the inside of the case where no explosion-proof mechanism is provided can be protected from gas. This can prevent the case 20 from fracturing before the explosion-proof mechanisms. As a result, the operation stability of the explosion-proof mechanisms can be improved, and the reliability of the power storage device 10 can be improved. Note that to facilitate gas flow in the case 20, the prism portions of the wall portions 42B are not necessarily blocked. Groove portions such as the groove portions 41D of the first holding member 41, and a portion that protrudes downward (toward the bottom surface portion 20B of the case 20) from the lower surface (the reverse side of the surface facing the electrode assembly 14 in the axial direction) of the pedestal plate portion 42A may also be formed for the second holding member 42.

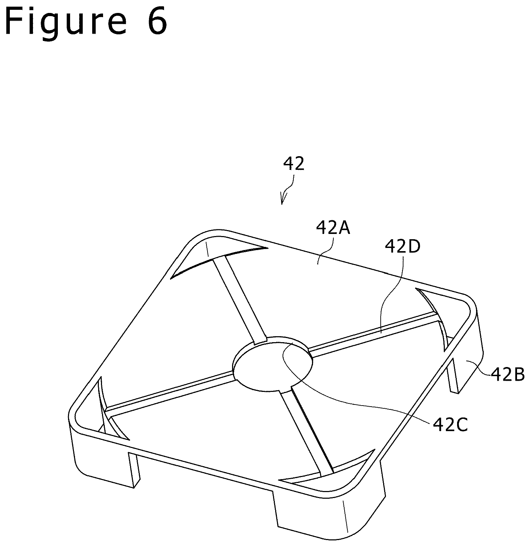

Note that as shown in FIG. 6, groove portions 42D may be formed in the lower surface of the pedestal plate portion 42A of the second holding member 42. For example, the groove portions 42D may be formed along the diagonal lines of the pedestal plate portion 42A so as to communicate with an opening portion 42C and the through-holes of the wall portions 42B. Note that the groove portions 42D do not necessarily communicate with the opening portion 42C and the through-holes of the wall portions 42B. According to the groove portions 42D, gas can be further actively guided on the lower surface side of the pedestal plate portion 42A in the case 20. According to the groove portions 42D, the electrolytic solution can be actively guided.

### [Another Embodiment (Explosion-Proof Mechanisms in Bottom Surface Portion)]

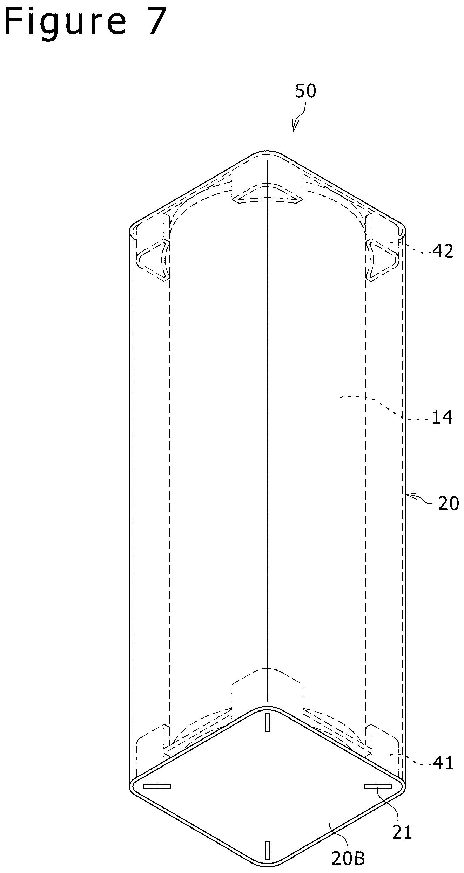

Referring to FIG. 7, a power storage device 50 that is another example of the embodiment is described. In the following description, components similar to those in the aforementioned power storage device 10 are assigned similar symbols and described, or the description is omitted.

The power storage device 50 is provided with explosion-proof mechanisms at the lower end portion of the power storage device 50 instead of the explosion-proof mechanisms provided at the upper end portion of the power storage device 50 described above. The explosion-proof mechanisms in the present embodiment are formed as groove-shaped thin-wall portions 21 in the bottom surface portion 20B of the case 20. The thin-wall portions 21 in the present embodiment are formed along the diagonal lines of the bottom surface portion 20B of the quadrangular-shaped case 20. Accordingly, when an abnormality occurs in the power storage device 50, the internal pressure increases, and the bottom surface portion 20B of the case 20 is pressed outward from the case 20, the thin-wall portions 21 preferentially fracture, and exhaust ports are formed in the bottom surface portion 20B of the case 20.

In the power storage device 50, the first holding member 41 is provided at the lower end portion where the explosion-proof mechanisms are provided, and the second holding member 42 is provided at the upper end portion where no explosion-proof mechanism is provided. Accordingly, similar to the power storage device 10 described above, the reliability of the power storage device 50 can be improved.

### [Another Embodiment (Power Storage Device (Tab Structure))]

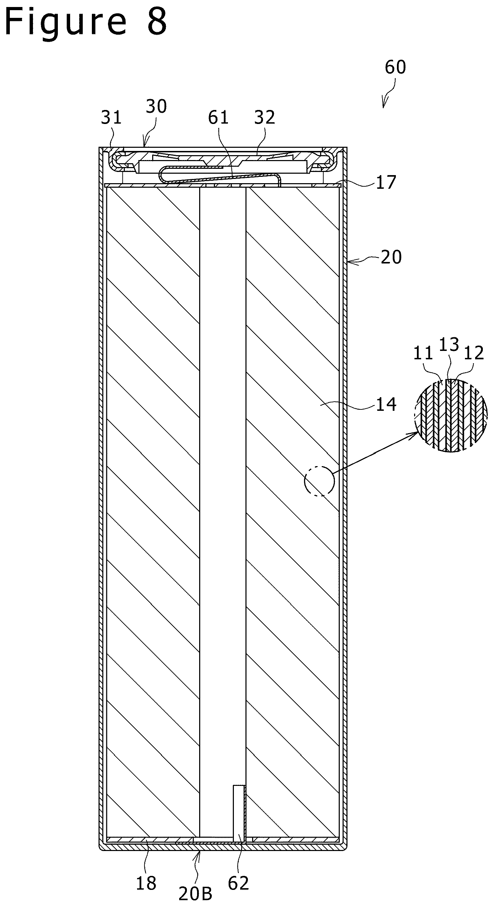

Referring to FIG. 8, a power storage device 60 that is another example of the embodiment is described. In the following description, components similar to those in the aforementioned power storage device 10 are assigned the similar symbols and described, or the description is omitted. Note that in FIG. 7, the first holding member 41 and the second holding member 42 are omitted.

The power storage device 60 comprises: the cylindrical-shaped electrode assembly 14 that includes the strip-shaped positive electrode 11 and the strip-shaped negative electrode 12 that are wound with the strip-shaped separator 13 interposed therebetween; an electrolyte (not shown); the case 20 that has a polygonal prism shape (a quadrangular shape in the present embodiment) and stores the electrode assembly 14 and the electrolyte; and the sealing assembly 30 that has a polygonal shape (a quadrangular shape in the present embodiment), and blocks the opening portion of the case 20. The upper insulating plate 17 is provided on the upper side of the electrode assembly 14. On the other hand, the lower insulating plate 18 is provided under the electrode assembly 14.

A positive electrode lead 61 extends from the upper end of the electrode assembly 14. The positive electrode lead 61 is connected to, for example, the center portion of the positive electrode 11 in the longitudinal direction. The positive electrode lead 61 passes through the through-hole of the upper insulating plate 17, extends toward the sealing assembly 30, and is welded to the lower surface of the sealing plate 32. Accordingly, the sealing plate 32 functions as a positive electrode external terminal.

On the other hand, a negative electrode lead 62 extends from the lower end of the electrode assembly 14. The negative electrode lead 62 is connected to, for example, the end portion of the negative electrode 12 in the longitudinal direction. The negative electrode lead 62 extends toward the bottom surface portion 20B of the case 20, and is welded to the inside of the bottom surface portion 20B of the case 20. Accordingly, the case 20 functions as a negative electrode external terminal.

Also in the power storage device 60, similar to the power storage device 10, the explosion-proof mechanisms are provided on the upper end side of the power storage device 60, the first holding member 41 is provided on the upper end portion of the inside of the case 20, and the second holding member 42 is provided on the lower end portion of the inside of the case 20. Accordingly, the reliability of the power storage device 60 can be improved. Similar to the power storage device 50, the explosion-proof mechanisms may be provided at the lower end portion of the power storage device 60, the first holding member 41 may be provided at the lower end portion of the inside of the case 20, and the second holding member 42 may be provided at the upper end portion of the inside of the case 20.

### [Another Embodiment (Power Storage Device (Rivet Structure))]

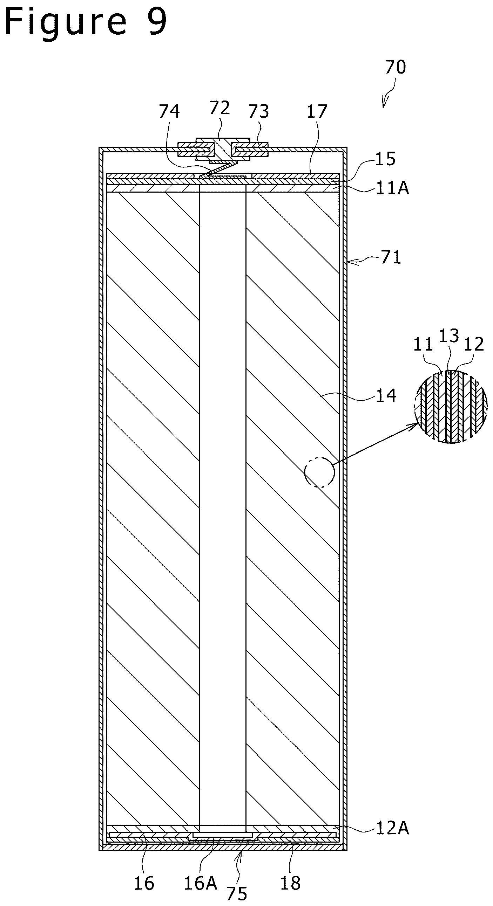

Referring to FIG. 9, a power storage device 70 that is another example of the embodiment is described. In the following description, components similar to those in the aforementioned power storage device 10 are assigned the similar symbols and described, or the description is omitted. Note that in FIG. 8, the first holding member 41 and the second holding member 42 are omitted.

The power storage device 70 comprises: the cylindrical-shaped electrode assembly 14 that includes the strip-shaped positive electrode 11 and the strip-shaped negative electrode 12 that are wound with the strip-shaped separator 13 interposed therebetween; electrolyte (not shown); the case 71 that has a polygonal prism shape (a quadrangular prism shape in the present embodiment) and stores the electrode assembly 14 and electrolyte; a rivet 72 that is provided in the top surface portion of the case 71 and serves as a positive electrode external terminal; and a sealing assembly 75 that has a polygonal shape (a quadrangular shape in the present embodiment) and blocks the opening portion of the bottom surface side of the case 20. The positive electrode current collector plate 15 and the upper insulating plate 17 are provided on the upper side of the electrode assembly 14. On the other hand, the negative electrode current collector plate 16 and the lower insulating plate 18 are provided on the lower side of the electrode assembly 14. The negative electrode current collector plate 16 joined to the negative electrode core exposed portion 12A of the negative electrode 12 passes through the lower insulating plate 18, and is electrically connected to the sealing assembly 75. The outer peripheral edge of the sealing assembly 75 may be joined by welding or the like to the opening on the lower side of the case 71.

The rivet 72 is made of metal. The rivet 72 is fixed to the opening portion formed in the top surface portion of the case 71 via an insulating member 73. The positive electrode current collector plate 15 is joined to the bottom surface of the rivet 72 by the positive electrode tab 74, and the rivet 72 functions as a positive electrode external terminal.

In the power storage device 70, the explosion-proof mechanisms are provided for the sealing assembly 75 of the power storage device 70, the first holding member 41 is provided at the lower end portion of the inside of the case 20, and the second holding member 42 is provided at the upper end portion of the inside of the case 20. Accordingly, the reliability of the power storage device 60 can be improved. Also in the power storage device 70, similar to the power storage device 60, a positive electrode lead that electrically connects the positive electrode 11 and the rivet 72 to each other, and a negative electrode lead that electrically connects the negative electrode 12 and the case 71 to each other may be provided instead of the positive electrode current collector plate 15 and the negative electrode current collector plate 16.

Note that the present disclosure is not limited to the aforementioned embodiments and their modified examples, and it is a matter of course that various change and improvement can be made in a scope of the items described in the claims of the present application.

### REFERENCE SIGNS LIST

10, 50, 60, 70 Power storage device, 11 Positive electrode, 11A Positive electrode core exposed portion, 12 Negative electrode, 12A Negative electrode core exposed portion, 13 Separator, 14 Electrode assembly, 15 Positive electrode current collector plate, 15A Projections, 16 Negative electrode current collector plate, 16A Projections, 17 Upper insulating plate, 18 Lower insulating plate, 20, 71 Case, 20B Bottom surface portion, 21 Thin-wall portion (explosion-proof mechanism), 30, 75 Sealing assembly, 31 Lid plate, 31A Annular portion, 32 Sealing plate, 32A Outer peripheral portion, 32B Center portion, 32C Thin-wall portion (second explosion-proof mechanism), 33 Gasket, 34 Thin-wall portion (first explosion-proof mechanism), 41 First holding member, 41A, 42A Pedestal plate portion, 41B, 42B Wall portion, 41C Opening portion, 41E Through-hole, 41F Through-hole, 42 Second holding member, 42D Groove portion, 61 Positive electrode lead, 62 Negative electrode lead, 72 Rivet, 73 Insulating member, 74 Positive electrode tab

## Claims

1. A power storage device, comprising:
an electrode assembly in which a positive electrode, a negative electrode, and a separator are wound;
a polygonal prism-shaped case that includes a prism portion having a polygonal shape, and an opening portion at one end of the prism portion, and stores the electrode assembly and an electrolytic solution; and
a sealing assembly that has the polygonal shape and blocks the opening portion of the case, wherein
a holding member that intervenes between the case and one end portion of the electrode assembly in an axial direction is provided, and
the holding member includes a wall portion positioned in a corner portion space between the electrode assembly and a corner portion of the prism portion.

2. The power storage device according to claim 1, wherein
the holding member includes: a pedestal plate portion that faces an end surface of the electrode assembly in the axial direction; and
the wall portion provided on a corner portion side of the prism portion on the pedestal plate portion, and
the wall portion has a through-hole that penetrates in the axial direction.

3. The power storage device according to claim 1 or 2, wherein
the holding member is provided at opposite end sides of an inside of the case.

4. The power storage device according to any one of claims 1 to 3, further comprising
an explosion-proof mechanism that releases gas in the case to an outside from one end side of the electrode assembly in the axial direction, wherein
a through-hole that is provided in the wall portion of the holding member on another end side of the electrode assembly in the axial direction is blocked.

5. The power storage device according to claim 2, wherein
a groove that extends toward the through-hole of the wall portion is provided in one surface of the pedestal plate portion.

6. The power storage device according to any one of claims 1 to 5, wherein
the wall portion protrudes from each of opposite surfaces of a pedestal plate in the axial direction, and
a cutout is formed in a surface facing a center of the pedestal plate at a portion of the wall portion that protrudes in a direction away from the pedestal plate.

7. The power storage device according to any one of claims 1 to 6, wherein
the negative electrode includes metal lithium foil.

8. The power storage device according to any one of claims 1 to 7, wherein
a silicon-based material that contains 10% or more silicon by weight is used as a negative-electrode active material of the negative electrode.

9. The power storage device according to claim 8, wherein
irregularities are formed on a surface of the separator.

10. The power storage device according to any one of claims 1 to 8, wherein
the electrode assembly includes a wound core having the polygonal shape viewed from an axial direction.
